# EUROPEAN PATENT SPECIFICATION

(11) **EP 4 132 821 B1**
(45) Date of publication and mention of the grant of the patent: **27.12.2023**
(21) Application number: 21717235.2
(22) Date of filing: 06.04.2021
(51) Int. Cl.: B60T 8/17, B62L 3/02

(54) **AN ABS ACTUATOR DEVICE FOR A BICYCLE HYDRAULIC BRAKING SYSTEM**
EIN ABS AKTOR FÜR HYDRAULISCHE BREMSE EINES FAHRRADS
DISPOSITIF D'ACTIONNEMENT ANTIBLOCAGE POUR FREIN HYDRAULIQUE DE VÉLO

(30) Priority: 08.04.2020 IT 202000007483
(43) Date of publication of application: 15.02.2023
(73) Proprietor: BLUBRAKE S.P.A., 20122 Milano (IT)
(72) Inventor: PICCIRILLO, Giuseppe, 20122 Milano (IT); TODESCHINI, Fabio, 20122 Milano (IT)
(74) Representative: Notaro, Giancarlo
(86) International application number: PCT/IB2021/052845
(87) International publication number: WO 2021/205337

(56) References cited:
- WO-A1-2017/093891
- WO-A1-2019/155371
- DE-A1- 19 815 599
- JP-A- 2014 148 308
- US-A1- 2010 043 426
- US-A1- 2015 001 018

## Description

### Field of the invention

The present invention relates, in general, to braking systems for bicycles and - in particular - relates to an ABS actuator device for a bicycle hydraulic braking system.

The invention is applicable to any type of bicycle, including bicycles assisted by an electric motor. The application of the invention is not excluded to any other type of cycle, including motorcycles, or electric scooters.

### Prior art

The document WO 2019 155371 A1 illustrates an ABS actuator device for a bicycle hydraulic braking system of the type indicated in the preamble of the attached claim 1.

This known device comprises an actuator body, defining an inner cavity, and having an inlet opening and an outlet opening communicating with the inner cavity. A floating member is slidably mounted in this cavity, configured so as to define an upstream chamber within the cavity, communicating with the inlet opening, and a downstream chamber, communicating with the outlet opening. A main sealing ring is mounted on the floating member between said upstream chamber and said downstream chamber.

The aforesaid inlet and outlet openings are arranged to be hydraulically connected to a pumping device associated with an actuator member of a bicycle brake (for example, a brake lever) and with a hydraulic device for actuating a bicycle brake (e.g. the hydraulic cylinder of the caliper of a disc brake), respectively.

The floating member defines a passage for hydraulic communication between the upstream chamber and said downstream chamber and is provided with a valve member for controlling the hydraulic communication through this passage.

The aforesaid actuator device also comprises an electric motor configured to control the position of the floating member within the cavity of the actuator body.

During normal operation of the bicycle brake, the electric motor is inactive and the floating member is in an end position, in the direction of the downstream chamber, wherein the valve member of the floating member is in an open position of said passage. Therefore, during normal operation of the brake, the floating member remains in this end position and the fluid pumped by the brake lever can flow from the inlet opening to said outlet opening, through the passage left open by the aforesaid valve member, to then arrive at the brake caliper.

Conversely, in conditions wherein the activation of the ABS is required, the electric motor is activated (by an electronic controller that receives a signal indicating, for example, an incipient locking of the bicycle wheel) and commands a movement of the floating member in the direction of the upstream chamber and away from the aforesaid end position. In this condition, the valve member is in a closed position, so that the communication between the upstream and downstream chambers is interrupted. At the same time, the movement of the floating member in the direction of the upstream chamber generates an increase in the volume of the downstream chamber, which gives rise to a decrease in the pressure of the fluid supplied to the brake caliper and, consequently, to a decrease in the braking action, which allows locking of the wheel to be avoided.

### Technical problem

In the aforesaid known device, the valve member with which the floating member is provided to open the communication between the two chambers of the actuator device in the end position of the floating member, consists of a body that is slidably mounted in an axial cavity of the floating member and subject to the action of a spring that tends to push it against a valve seat defined in the wall of the axial cavity of the body of the floating member. The passage controlled by said valve member, which connects the upstream chamber with the downstream chamber, is formed through the body of the floating member. The valve member has a rod extending through an axial hole of the floating member and protruding into the downstream chamber. In the aforesaid end position of the floating member, the tip of the rod engages an abutment element carried by the body of the actuator device, so that the valve member is kept in a position spaced apart from its valve seat, against the action of the aforesaid spring.

As is evident, the actuator member of the known device has a relatively complex structure; it consists of a plurality of components and involves complex and expensive manufacturing and assembly operations, also taking into account the need to adopt relatively narrow manufacturing tolerances, in order to ensure correct and stable operation over time of the aforesaid valve member.

The need is therefore felt for an actuator device that is simpler, cheaper and yet at least as efficient and reliable as the known device described above.

### Object of the invention

The object of the present invention is to overcome the drawbacks of the prior art.

More generally, the object of the invention is to produce an actuator device of the type indicated above which has a relatively simple structure that is easy and cheap to construct and assemble and, nevertheless, extremely efficient and reliable during use.

### Summary of the invention and its advantages

In order to achieve this object, the invention relates to an actuator device having the characteristics of the attached claim 1.

Compared to the known device described above, the device according to the invention is mainly characterized in that:
- the only valve member with which the actuator member is provided is constituted by said main sealing ring,
- the aforesaid passage that connects the upstream chamber with the downstream chamber is defined only by an annular gap between an outer surface of said floating member and the wall of said inner cavity of the actuator body,
- the wall of said inner cavity of the actuator body and/or said main sealing ring are configured in such a way that:
- in said end position of the floating member, the main sealing ring is spaced apart from the wall of the inner cavity, so as to leave free the

communication, through said annular gap, between the upstream chamber and the downstream chamber, while
- when the floating member is moved away from said end position beyond a predetermined distance, said main sealing ring engages with the wall of said inner cavity, interrupting communication through said annular gap between the upstream chamber and the downstream chamber.

As is evident, in the actuator device according to the invention, the communication passage formed through the body of the floating member, which was provided in the known device described above, is completely eliminated. Consequently, the need to form said passage in such a way as to define a valve seat is also completely eliminated, as well as the valve member slidably mounted within an inner cavity of the body of the floating element and the spring associated therewith.

The construction and assembly of the device are, therefore, drastically simplified and the related cost is significantly reduced.

At the same time, the efficiency and reliability of use of the device are ensured, thanks to the fact that the main sealing ring is used as the valve member, and thanks to the fact that the wall of the inner cavity of the body of the actuator device and/or the sealing ring is shaped in such a way that in the end position of the floating member - in the direction of the downstream chamber - the main sealing ring is spaced apart from the wall of the inner cavity, so as to leave the communication free, through said annular gap, between the upstream chamber and the downstream chamber, so that there is no control effect of the braking force characteristic of ABS systems. At the same time, when the floating member is moved away from said end position, i.e. it is moved in the direction of the upstream chamber for a distance greater than a predetermined distance, the main sealing ring enters into engagement with the wall of the inner cavity, interrupting the communication between the upstream chamber and the downstream chamber, and causing the ABS effect following the simultaneous increase in volume of the downstream chamber.

### Preferred embodiment

In a preferred embodiment of the invention, the main sealing ring has a central annular portion mounted within a seat of the body of the floating member, and an outer elastically deformable circumferential lip, which engages with the wall of the inner cavity of the body of the actuator device when the floating member is moved away from said end position beyond a predetermined distance.

Again in the case of this embodiment, the wall of said inner cavity has:
- a portion of enlarged diameter at the position taken by the main sealing ring when the floating member is in the aforesaid end position,
- a portion of reduced diameter at the position taken by the main sealing ring when the floating member is moved away from its end position, and
- a tapered portion connecting said portion of enlarged diameter to said portion of reduced diameter, which acts as an invitation surface to cause the necessary deformation of the main sealing ring when this must engage the wall of said portion of reduced diameter of the inner cavity following the moving away of the floating member from its end position.

According to another characteristic, when the circumferential lip is engaged against the wall of the inner cavity it is - in any case - able to deform elastically following an increase in pressure in the downstream chamber with respect to the upstream chamber, so as to re-establish communication through said annular gap, and equalize the pressure in the aforesaid upstream chamber and downstream chamber.

### Additional aspects of the invention

According to another aspect, which forms the object of the invention, even independently of the characteristics of the characterizing part of claim 1, the actuator device of the invention is provided with a solenoid valve configured to place in direct communication, when activated, the inlet opening of the actuator device with the outlet opening, in such a way that said solenoid valve can be controlled by an electronic control unit of the bicycle braking system to establish said communication each time that an operating anomaly of the actuator device is detected by said electronic control unit. In this way, additional safety is obtained on the fact that the braking system is always able to operate correctly, ensuring the braking capacity.

According to yet another aspect, which also forms the object of the invention, even independently of the characteristics of the characterizing part of claim 1, the actuator device of the invention is provided with a pressure sensor arranged to detect the pressure in said upstream chamber or in said downstream chamber, in such a way as to allow the electronic control unit of the braking system to have direct control over the pressure of the fluid. In this way, the electronic control unit may have a more direct control over the correct functioning of the braking system, and can intervene more promptly in the event of any malfunction that endangers the operation of the brake.

According to yet another aspect, which also forms the object of the invention, even independently of the characteristics of the characterizing part of claim 1, the aforesaid inlet and outlet openings of the actuator device of the invention are arranged on opposite sides of the body of the actuator device, and are provided with respective connecting elements with outlets at 90 degrees with respect to the respective openings in the body of the actuator device. At least one of said connecting elements may be selectively oriented into different positions, in such a way that the two outlets of the connecting elements may both be, for example, oriented parallelly to the axis of the floating member of the actuator device, and both facing towards one end of the body of the actuator device or, for example, towards opposite ends of the body of the actuator device. Thanks to this characteristic, the actuator device of the invention can be easily configured to have the inlet and outlet tubes - for the fluid - that leave the actuator device in any direction, which allows great flexibility in the choice of mounting position of the actuator device on the bicycle. For example, the actuator device can be mounted vertically on one of the two arms of the front fork of the bicycle; adjacent to the caliper of a disc brake, with the tubes protruding from opposite ends; or it can be mounted at a distance from the brake, for example on the upper longitudinal tube of the bicycle frame (or even inside it), with the tubes for the fluid coming out from the front end of the body of the actuator device).

### Detailed description of preferred embodiments of the invention

Further characteristics and advantages of the invention will become apparent from the description that follows with reference to the attached drawings, provided purely by way of non-limiting example, wherein:
- Figure 1 is a partial top view of a bicycle using the ABS actuator device according to the invention, with the actuator device mounted inside the upper longitudinal tube of the bicycle frame,
- Figure 2 is a perspective view showing a detail of the front wheel of the bicycle of Figure 1, with the ABS actuator device mounted vertically on one of the two arms of the front fork of the bicycle,
- Figure 3 is a detail of a cross-sectioned side view of the bicycle of Figure 1, with the ABS actuator device mounted inside the upper longitudinal tube of the bicycle frame.
- Figure 4 is a cross-sectional view of an embodiment of the actuator device of the invention, illustrated in an operating condition of normal operation of the braking system, i.e. with inactive ABS,
- Figure 4A illustrates a detail on an enlarged scale of Figure 4,
- Figure 4B illustrates the detail of Figure 4A in the ABS activation condition,
- Figure 4C is a variant of Figure 4A.
- Figure 5A is a view, on an enlarged scale, of a detail of Figure 4A,
- Figures 5B and 5C show two variants of Figure 5A,
- Figure 6 is a partially cross-sectional view of another embodiment of the actuator device of the invention, which makes use of a safety solenoid valve to bypass the ABS actuator device in the event of a malfunction,
- Figure 7 is a cross-sectional view of the device of Figure 6, on an enlarged scale,
- Figure 8 illustrates a detail of Figure 7, in a further enlarged scale, showing the aforesaid by-pass solenoid valve,
- Figure 9 illustrates another detail on an enlarged scale of Figure 4, with reference to another aspect of the invention,
- Figure 10 is a perspective view of a component of the actuator device that is illustrated in Figure 9,
- Figure 11 is a perspective view of a pressure sensor forming part of the actuator device of Figure 4, and
- Figures 12 and 13 are perspective views showing two alternative configurations of the actuator device according to the invention.

### General characteristics of the actuator device and installation on the bicycle

In the drawings, the reference number 1 indicates - in its entirety - a bicycle including a braking system equipped with an ABS actuator device according to the invention.

In the present invention, the term ABS is used according to its conventional meaning in the art, that is, with reference to an Anti-Blocking System configured to reduce the action of a brake on a wheel when, during braking, the wheel tends to lock up. Devices of this type have been widespread for a long time in the field of motor-vehicles, but for some years they have also found increasing application in the field of bicycles.

The actuator device according to the invention, which - in the attached drawings - is indicated with the reference number 2, has been conceived and developed by the Applicant with particular reference to the application on a bicycle, and has characteristics that make it particularly advantageous in the case of such an application.

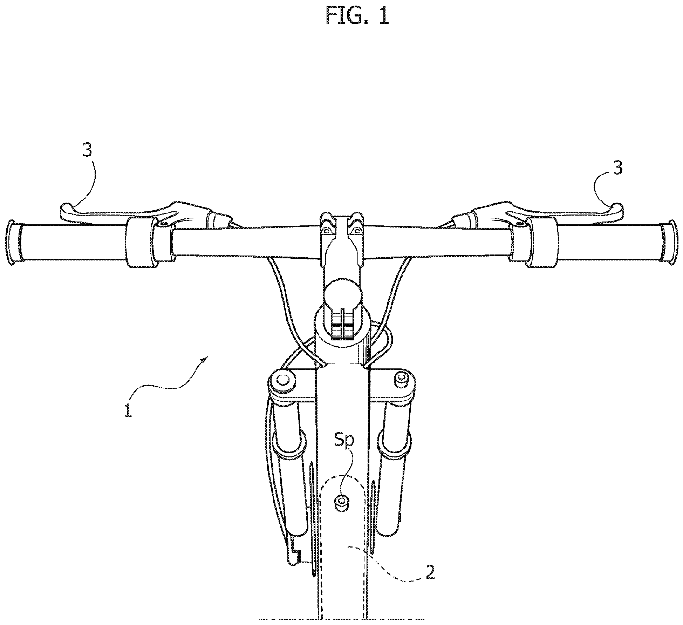

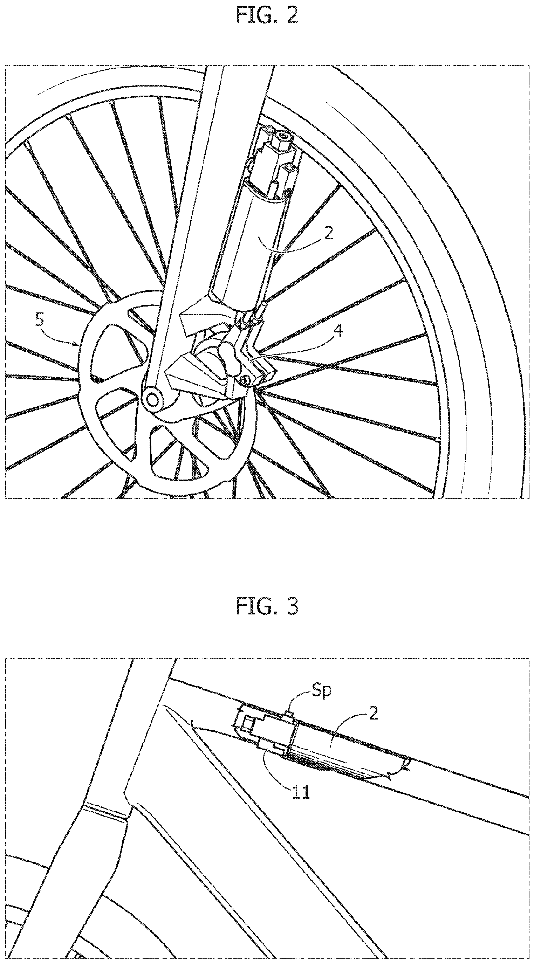

The drawings show, purely by way of example, some embodiments of the actuator device 2 and its possible arrangements on the bicycle. In general, the actuator device 2 is interposed in the hydraulic connection between a pumping device (not visible in the drawings) of any known type associated with the brake control member (for example, the lever 3 for actuating the front brake of the bicycle - see Figure 1) and an actuation device of the brake (for example, the hydraulic cylinder of the caliper 4 of a disc brake 5 - see Figure 2) associated with the front wheel of the bicycle.

As will be described in detail below, the actuator device 2 is configured in such a way as to leave ample flexibility in envisaging its positioning on the bicycle. For example, it may be mounted on one of the two arms of the front fork of the bicycle, adjacent to the front disc brake controlled by it (also directly by means of the brake caliper support exploiting the same brake screws, see Figure 2), or, again for example, it may be mounted inside the upper longitudinal tube of the frame of the bicycle (Figure 3), by providing a closed opening with a cover in the tube of the frame, or by providing mounting starting from one end of the frame tube, during manufacture and assembly of the frame.

### Connecting elements adaptable to the type of installation

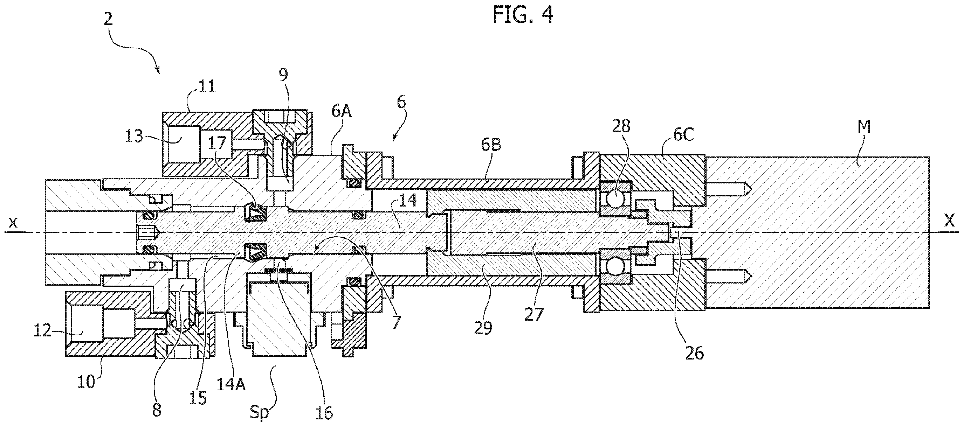

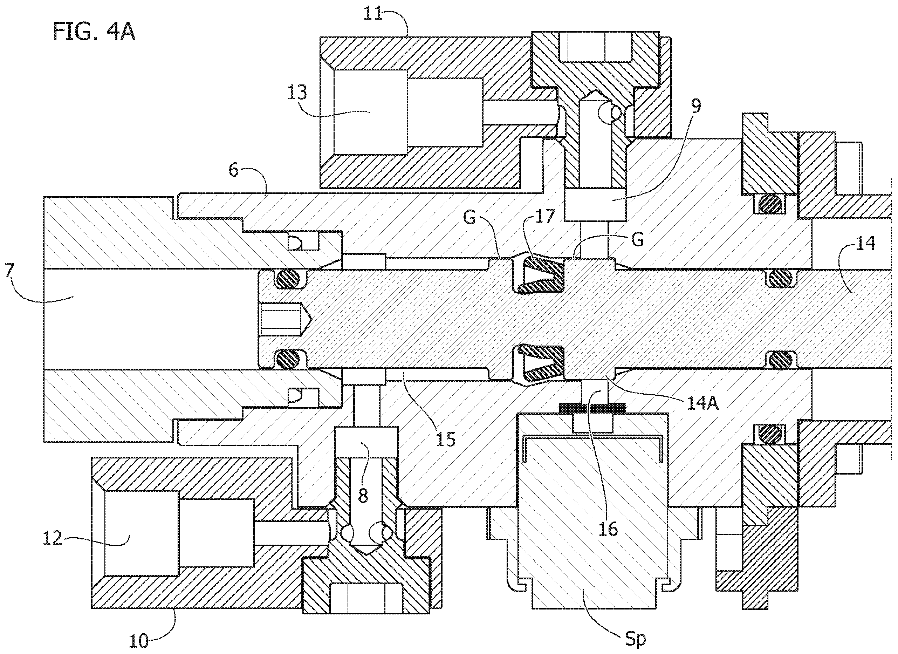

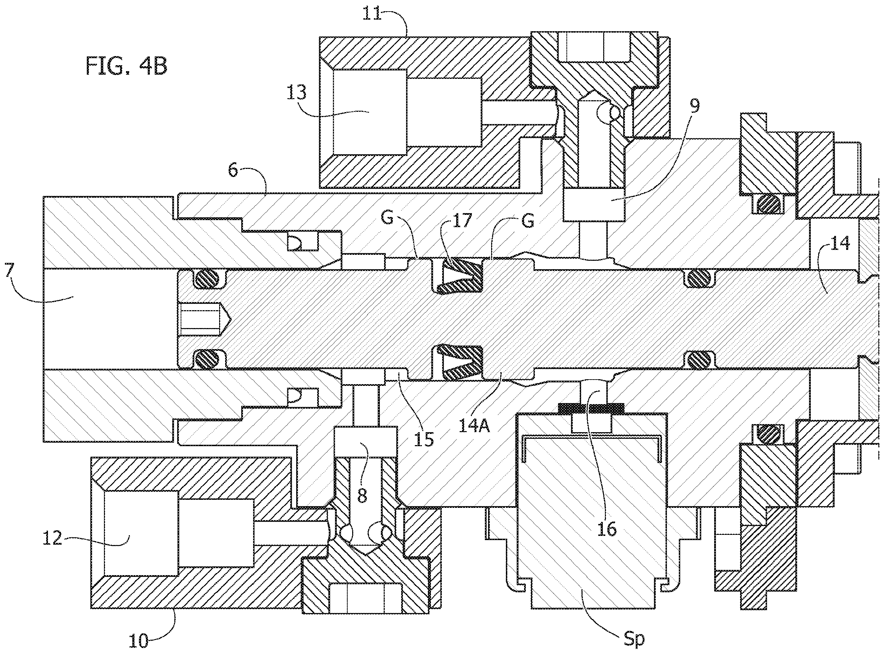

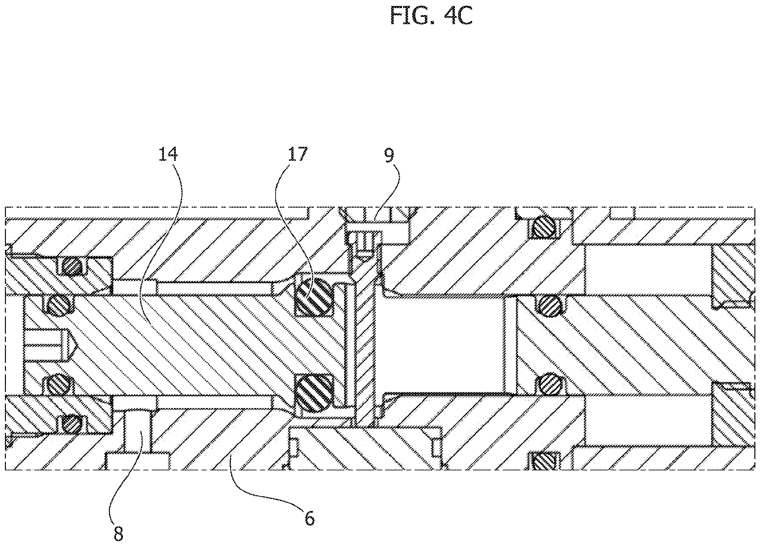

With reference to Figure 4 and Figure 4A, in the embodiment illustrated therein, the actuator device 2 comprises a substantially elongated body 6 within which an inner cavity 7 is formed. The body 6 of the actuator device has an inlet opening 8 and an outlet opening 9, both communicating with the inner cavity 7, and formed on opposite sides of the body 6. In the example illustrated, the inlet and outlet openings 8, 9 are defined by holes directed radially and orthogonally with respect to the X-X axis of the body 6.

Two connecting elements 10, 11 with outlets 12, 13 oriented at 90 degrees with respect to the openings 8, 9, i.e. oriented parallelly to the X-X axis, are associated with the inlet and outlet openings 8, 9. The inlet opening 8 is intended to be connected, for example, by means of a flexible tube, to the pumping device controlled by the brake lever 3; while the outlet opening 9 is intended to be connected, for example, by means of a flexible tube, to the hydraulic cylinder actuator (not visible in the drawings) of the brake caliper 4.

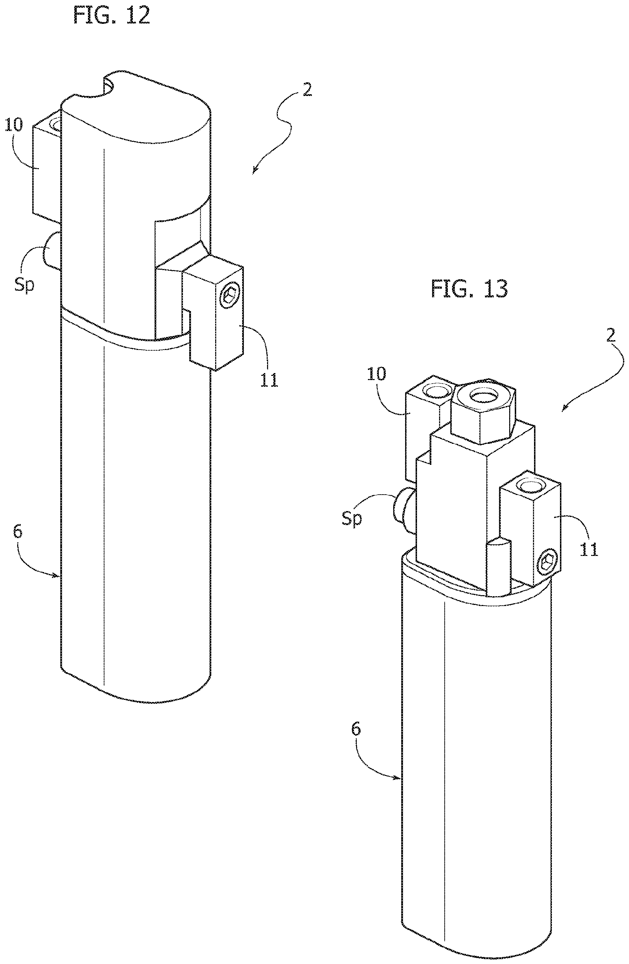

As is also visible in Figures 12 and 13, at least one of the connecting elements 10, 11 is selectively oriented into different positions, in such a way that the two outlets 12, 13 of the connecting elements may both be oriented, for example, parallelly to the X-X axis of the actuator device, and both facing towards one end of the body of the actuator device or towards opposite ends of the body of the actuator device.

Thanks to this characteristic, the actuator device of the invention can be easily configured to have the inlet and outlet tubes of the fluid that come out from the same end of the body of the actuator device, or from opposite ends, which allows great flexibility in the choice of mounting position of the actuator device on the bicycle. For example, as already indicated above, the actuator device 2 may be mounted vertically on one of the two arms of the front fork of the bicycle (Figure 2); adjacent to the caliper 4 of the disc brake 5, with the tubes protruding in opposite directions; or it can be mounted at a distance from the brake, for example, inside the upper longitudinal tube of the bicycle frame (Figure 3), with the tubes for the fluid both coming out from the front end in the same direction.

### Floating member and main sealing ring

With reference again to Figures 4 and 4A, a floating member 14 is slidably mounted within the inner cavity 7 of the body 6, said floating member having an elongated cylindrical body, with a portion 14A of larger diameter, which defines - inside the cavity 7- two chambers whose volume varies according to the position of the floating member: an upstream chamber 15, communicating with the inlet opening 8 (and consequently, in the condition of use, with the outlet of the pumping device operated by the brake lever 3), and a downstream chamber 16, communicating with the outlet opening 9 (and consequently, in the aforesaid condition of use, with the inlet of the hydraulic cylinder of actuation of the brake caliper 4). The chamber 16 is more clearly visible in Figure 4B, since in the position of the floating member 14 illustrated in Figure 4A (i.e. the end position towards the right, looking at the figures), the chamber 16 is in its minimum volume condition.

The larger diameter portion 14A of the floating member 14 has a reduced diameter with respect to the diameter of the corresponding portion of the cavity 7 within which the portion 14A slides, to such an extent as to define an annular gap G that constitutes a communication passage between the two chambers 15,16.

The communication passage between the two chambers 15, 16, consisting of the annular gap G defined between the outer surface of the floating member 14 and the wall of the cavity 7, is controlled by a valve member consisting of an main sealing ring 17 associated with the floating body 14. In the example, the sealing ring 17 is mounted in a circumferential groove of the portion 14A of the floating member 14. The sealing ring can be made of any elastomeric material suitable for the purposes indicated here.

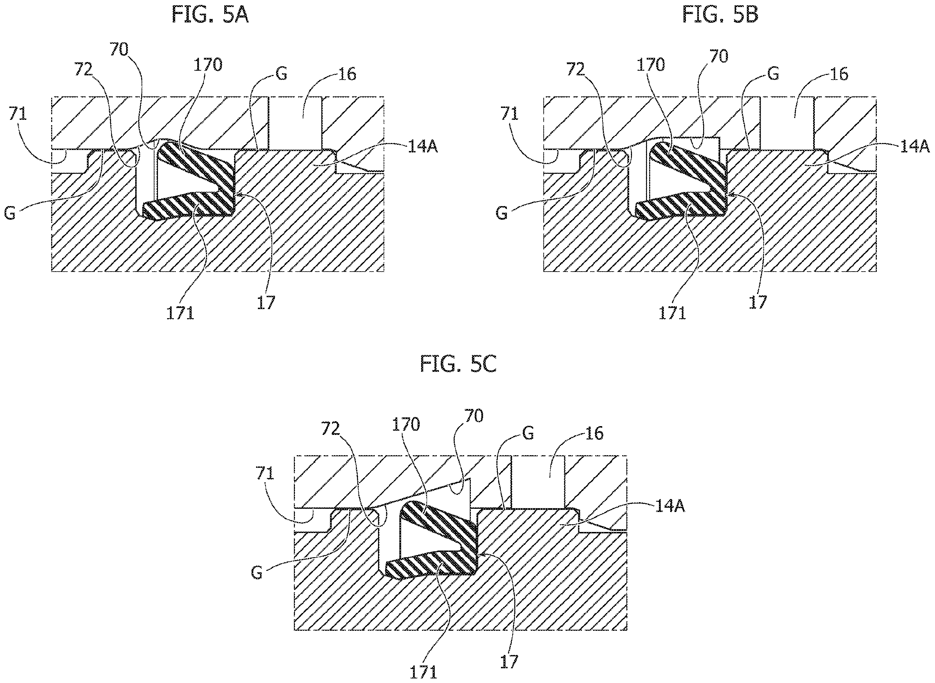

With reference to the detail on an enlarged scale that is illustrated in Figure 5A, according to the invention, the wall of the inner cavity 7 of the body 6 of the actuator device and/or the main sealing ring 17 are configured in such a way that:
- in an end position of the floating member 14, in the direction of the downstream chamber 16 (the position illustrated in Figures 4 and 4A), the main sealing ring 17 is spaced apart from the wall of the inner cavity 7, so as to leave free the communication, through the annular gap G, between the upstream chamber 15 and the downstream chamber 16, while
- when the floating member 14 is moved away from said end position beyond a predetermined distance (Figure 4B), the main sealing ring 17 engages with the wall of the inner cavity 7, interrupting communication through said annular gap G between the upstream chamber 15 and the downstream chamber 16.

In a preferred embodiment of the invention, the main sealing ring 17 (see Figure 5A) has a central annular portion 171 mounted in the seat of the body of the floating member 14, and an outer elastically deformable circumferential lip 170, which engages with the wall of the inner cavity 7 of the body of the actuator device (Figure 4B) when the floating member 14 is moved away from said end position corresponding to a minimum volume of the downstream chamber 16.

Regardless of the conformation of the sealing ring 17 (i.e. also in the case of a sealing ring without a lip), the wall of said inner cavity 7 preferably has (see Figure 5A):
- a portion of enlarged diameter 70 at the position taken by the main sealing ring 17 when the floating member 14 is in the aforesaid end position,
- a portion of reduced diameter 71 at the position taken by the main sealing ring 17 when the floating member 14 is moved away from its end position (see Figure 4B), and
- a tapered portion 72 connecting said portion of enlarged diameter 70 to said portion of reduced diameter 71, which acts as an invitation surface to cause the necessary deformation of the main sealing ring 17 when this must engage the wall of said portion of reduced diameter 71 of the inner cavity 7 following the moving away of the floating member from its end position.

In the case of the example illustrated in Figure 5A, the enlarged diameter portion 70 of the cavity 7 is axially extended for a minimum length, and is connected on both sides by means of tapered surfaces with both the adjacent reduced diameter portions of the cavity 7, within which the portion 14A of the floating member slides.

In the variant of Figure 5B, the enlarged diameter portion 70 of the cavity 7 has a non-negligible axial extension, so as to define a portion of a cylindrical cavity 70. The cylindrical cavity portion 70, on one side, is connected by means of the tapered surface portion 72 with the reduced diameter portion 71 of the cavity 7. On the other side, the cylindrical surface portion 70 forms a step with respect to the adjacent reduced diameter portion of the cavity 7.

Figure 5C shows another variant, wherein the enlarged diameter portion 70 of the cavity 7 has a single conical configuration, so that it also fulfills the function of the aforesaid tapered surface 72.

Of course, Figures 5A-5C show only three embodiment examples, as it is understood that the cavity 7 could have any different shape which - in any case - ensures the operation described above, i.e. so that in the end position of the floating member 14 - in the direction of the downstream chamber 16 - the sealing ring leaves the communication free through the gap G, while when the floating member is moved away from this position, the sealing ring engages the wall of the cavity 7 and blocks the aforesaid communication.

It is important to note that in the embodiments described here, the aforesaid annular gap G constitutes the only communication passage between the upstream chamber and the downstream chamber. Unlike the prior art, therefore, in the actuator device according to the invention, the floating member may have a solid body, without an inner passage formed through said body for communication between the two chambers, without a valve member slidably mounted inside the body of the floating member and without a spring associated with the valve member.

The construction and assembly of the device are, therefore, drastically simplified and the related cost is significantly reduced.

Figure 4C shows a variant of Figure 4A, which refers to the case wherein the sealing ring 17 consists of a conventional O-ring type. In this case, as in the case of Figure 4, the floating element 14 has a portion of enlarged diameter wherein the circumferential groove that receives the sealing ring 17 is formed, so that the sealing ring 17 can be supported on both sides by properly sized shoulders.

### Actuation of the ABS

With reference to Figure 4, the actuator device 2 comprises an electric motor M configured to control the axial position of the floating member 14 within the cavity 7 of the body 6.

In the example illustrated, the electric motor is mounted coaxially to one end of the body 6 of the actuator device. Again in the case of this non-limiting example, the actuator body has three portions 6A, 6B and 6C arranged axially in series and rigidly connected to each other, for example, by screws. The portion 6A contains the components of the hydraulic system of the actuator device that have been described above. The portion 6B is in the form of a tube and constitutes an extension element to which the portion 6C is secured, in the form of a ring, to which the body of the electric motor M is, in turn, secured. Again, these details are provided here only for a better understanding of the illustrated example, but should not be interpreted in a limiting sense, since the construction details and the embodiments may vary widely.

The electric motor M has a crankshaft 26, which is connected in rotation with a screw 27 arranged coaxially with the floating member 14. The screw 27 is rotatably mounted within the body portion 6C by means of a rolling bearing 28 and is held by the bearing 28 (in the manner which will be described in detail below) in a fixed axial position. The screw 27 is engaged within the inner thread of a nut 29, which is guided within the portion 6B so as to be free to slide axially, but prevented from rotating. In this way, the nut 29 moves axially due to a rotation of the screw 27. The nut 29 is rigidly connected to the floating member 14. Therefore, thanks to the arrangement described above, the electric motor M is able to control the axial position of the floating member 14.

During normal operation of the bicycle braking system, when there is no request for intervention of the ABS, the electric motor M is inactive and the floating member 14 is in the end position of Figures 4, 4A and 5A, wherein the main sealing ring 17 is spaced apart from the wall of the inner cavity 7, so as to leave free the communication, through the annular gap G, between the upstream chamber 15 and the downstream chamber 16; an intervention on the brake lever 3 causes the transfer of fluid through the actuator device 2 to the actuator cylinder of the brake caliper 4. In this condition, the fluid enters and exits the actuator device, thanks to the communication between the upstream chamber 15 and the downstream chamber 16 established by the open condition of the annular gap G.

On the other hand, in a condition wherein there is a request for intervention of the ABS, the electric motor M is activated in such a way as to control a movement of the floating member 14 and of its portion 14A in the direction of the upstream chamber 15, and away from said end position, so that the main sealing ring enters into engagement with the wall of the inner cavity 7, interrupting the communication through the annular gap between the upstream chamber 15 and the downstream chamber 16.

In this condition, the downstream chamber 16 increases in volume, generating a decrease in the pressure of the fluid supplied to the brake caliper 4 and, consequently, a decrease in the braking action that allows locking of the wheel to be avoided.

According to a technique known per se, the request for intervention of the ABS may be generated by an electronic control unit of the braking system, which is configured to receive signals from one or more sensors indicative of the operating conditions of the bicycle (for example, from an angular speed sensor of the wheel), and which is programmed to control the electric motor as a function of these signals, when they are indicative of an incipient locking of the wheel following braking.

### Pressure limiting device in the downstream chamber

The actuator device 2 is arranged to open the communication between the upstream chamber 15 and the downstream chamber 16 when the pressure in the downstream chamber 16 becomes greater than the pressure in the upstream chamber, by a differential greater than a predetermined threshold.

In the embodiments illustrated here, the outer circumferential lip 170 of the main sealing ring 17 extends in a cantilevered manner from said central portion 171 towards the upstream chamber 15, in such a way that when the circumferential lip 170 is in engagement against the wall of the reduced diameter portion 71 of the inner cavity 7 it is, however, able to deform elastically following an increase in pressure in the downstream chamber 16 with respect to the upstream chamber 15, so as to re-establish communication through said annular gap G, and equalize the pressure in the two aforesaid upstream and downstream chambers 15, 16.

### Safety solenoid valve

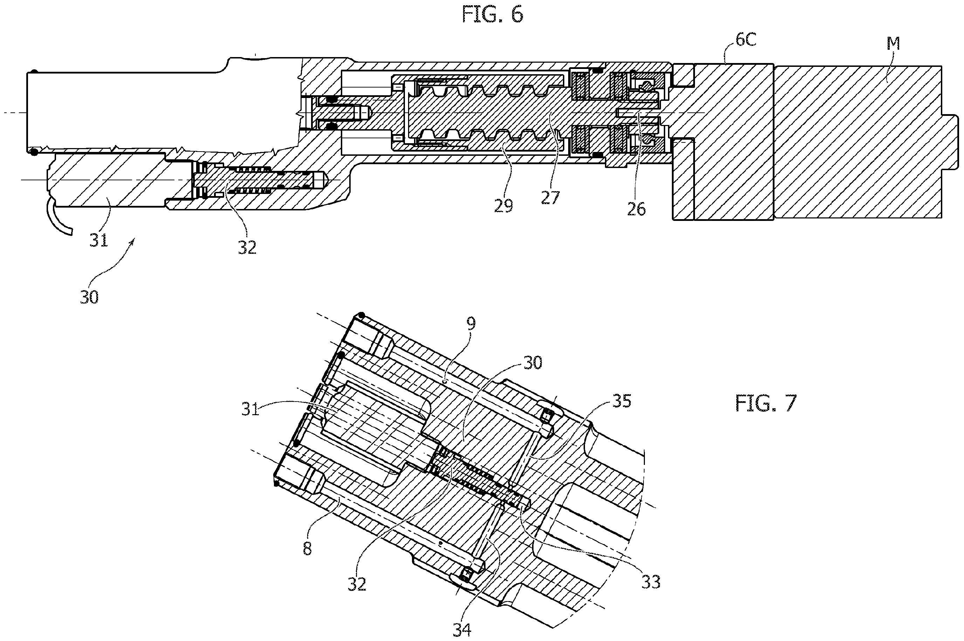

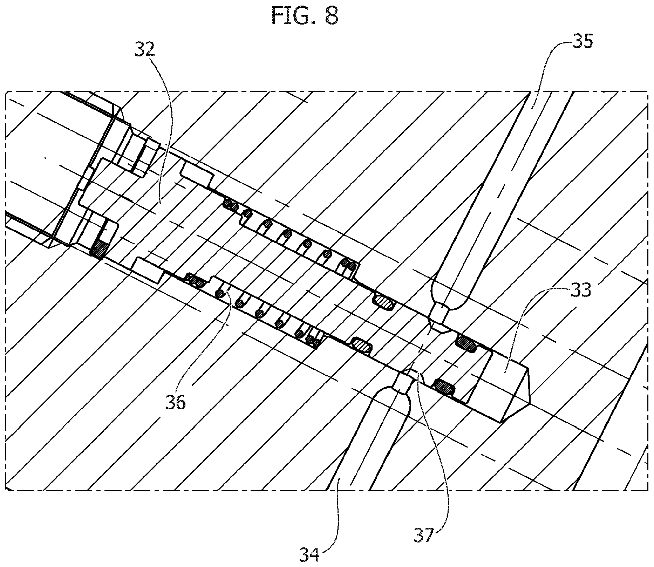

According to another aspect, which forms the object of the invention even independently of the characteristics of the characterizing part of claim 1, the actuator device 2 is provided with a solenoid valve 30 (Figures 6-8) configured, when activated, to place the inlet opening 8 of the actuator device into direct communication with the outlet opening 9.

The solenoid valve 30 may be controlled by an electronic control unit of the bicycle braking system to establish said communication whenever an operating anomaly of the actuator device is detected by the electronic control unit, for example, when the floating member remains erroneously locked in an ABS activation position, i.e. in a position such as that illustrated in Figure 4B. This provides additional safety that the braking system is always able to operate correctly, ensuring braking capability.

It should be noted that the provision of the safety solenoid valve eliminates the need, provided in devices of the prior art, of a reversible transmission between the electric motor and the floating member, such as to allow, if the floating member stops due to a fault, the fluid pressure generated by the brake lever to be able to move the floating member backwards. The adoption of a reversible transmission requires stringent quality controls and the use of an expensive production screw.

Figures 6-8 refer to an embodiment that is constructionally slightly different from that of Figure 4 (for example, regarding the positioning of the inlet and outlet openings 8, 9), but similar in substance. In Figure 6, the parts corresponding to those of Figures 4 are indicated by the same reference numbers.

In the illustrated example, the solenoid valve 30 includes a solenoid 31 that controls a slide valve member 32, slidably mounted in a cylindrical cavity 33 formed in the body 6 of the actuator device 2 parallel to and at a distance from the cavity 7, within which the floating member 14 is slidably mounted. The slide member 32 has a circumferential groove 37 which - in the position illustrated - intercepts the ends of two ducts 34, 35 formed in the body 6 and communicating, respectively, with the inlet and outlet openings 8, 9 (the cross-section of Figure 7 is taken in two radial planes with respect to the axis of the cavity 33, forming an angle of less than 90° between them). A helical spring 36 normally keeps the slide member 32 in an end position, wherein the groove 37 is axially spaced apart from the ends of the ducts 34, 35, so there is no communication between these ducts.

When the electronic unit detects an anomalous situation that requires the solenoid, it activates the solenoid 31 to attract the slide member 32 into the position illustrated in the drawings, against the action of the spring 36, so as to establish communication between the ducts 34, 35 and, consequently, between the inlet and outlet openings 8, 9 of the actuator device. In this way, if, for example, the floating member remains locked in an ABS activation position, despite the ABS intervention not being necessary, the braking system is able to operate correctly, ensuring that the fluid can pass from the pumping device operated by the brake lever 3, up to the brake caliper 4, passing through the actuator device 2.

### Electric motor - screw connection

According to another aspect, which forms the object of the invention even independently of the characteristics of the characterizing part of claim 1, the actuator device 2 provides, as indicated above, a screw-and-nut transmission 27, 29 (see Figure 4) between the electric motor M and the floating member 14. As also indicated above, this transmission includes a screw 27 rotatably mounted by means of a rolling bearing 28 within the body of the actuator device, and axially locked with respect to said rolling bearing.

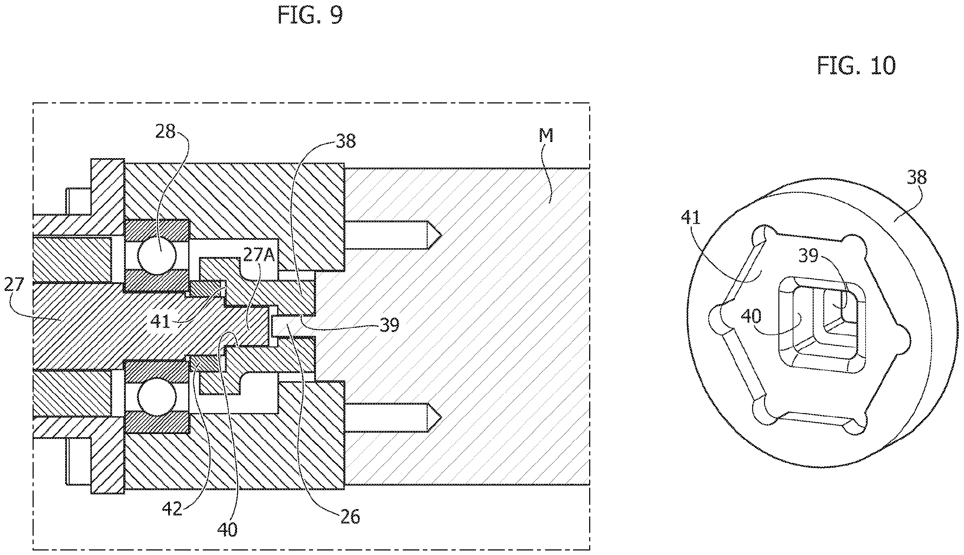

With reference to the embodiment of Figures 9, 10, the screw 27 is connected in rotation with the shaft 26 of the electric motor M by means of a bushing 38.

The bushing 38 has a bell-shaped conformation, with an axial hole having a first shaped portion 39 (in the example, square) for shape-coupling with the crankshaft 26, which has a corresponding shaped conformation.

The aforesaid axial hole of the bushing 38 has a second shaped portion 40 (in the example, square), wider than the section 39 for shape-coupling with an end nose 27A of the screw 27, having a corresponding conformation.

Finally, the axial hole of the bushing 39 opens into a shaped front cavity 41 (in the example hexagonal) for shape-coupling with a tightening nut 42, which is screwed onto a threaded portion of the end nose of the screw to lock the inner ring of the bearing 28 against an annular shoulder of the screw 27,

In this way, the bushing 39 is secured in rotation both with the shaft 26 of the electric motor M and with the screw 27, and also with the tightening nut 42, so that any risk of loosening the nut 42 is safely prevented.

### Pressure sensor on the downstream side

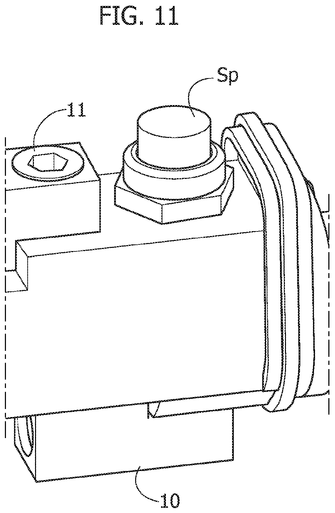

According to another aspect, which forms the object of the invention even independently of the characteristics of the characterizing part of claim 1, the actuator device 2 is provided with a pressure sensor S_{P} arranged to detect the pressure in the upstream chamber or, as in the case illustrated in the drawings, in the downstream chamber 16 (see Figures 4, 11), in such a way as to allow the electronic control unit of the braking system to have a direct control over the fluid pressure. In this way, the electronic control unit may have a more direct control over the correct functioning of the braking system, and can intervene more promptly in the event of any malfunction that endangers the operation of the brake.

In the example illustrated, the support body of the sensor S_{P} is screwed into a seat formed in the body 6.

The pressure signal output from the sensor S_{P} is used by the electronic control unit to enable an ABS control logic, for example, according to an embodiment described in the Italian patent application IT 10 201 6000111289. The sensor makes it possible to clearly identify when the cyclist is braking, precisely by means of the braking pressure signal. In this way, the control logic is more robust with respect to any false positives.

As is evident from the foregoing description, in the preferred embodiment the main sealing ring associated with the floating member constitutes the only valve member with which the floating member is provided to control the communication between the upstream and downstream chambers. Thanks to this arrangement, the actuator device according to the invention is constructively simple and extremely efficient, reliable and safe in operation.

Of course, without prejudice to the principle of the invention, the details of construction and the embodiments may vary widely with respect to those described and illustrated purely by way of example, without departing from the scope of the present invention, as defined by the attached claims.

## Claims

1. An ABS actuator device for a hydraulic braking system of a bicycle, cycle or scooter, comprising:
- an actuator body (6), defining an inner cavity (7), and having an inlet opening (8) and an outlet opening (9) communicating with said cavity (7),
- a floating member (14), slidably mounted within the inner cavity (7) of the actuator body (6) and configured in such a way as to define, within said cavity (7), an upstream chamber (15) communicating with said inlet opening (84) and a downstream chamber (16) communicating with said outlet opening (9),
- a main sealing ring (17), mounted on the floating member (14), between said upstream chamber (15) and said downstream chamber (16),
- wherein said inlet (8) and outlet (9) openings are arranged to be hydraulically connected to a pumping device associated with a brake actuator member and with a hydraulic actuator device of the brake, respectively,
- said floating member (14) defining a passage for hydraulic communication between said upstream chamber (15) and said downstream chamber (16), and being provided with a valve member for controlling the hydraulic communication through said passage,
- said actuator device further comprising an electric motor (M) configured to control the position of the floating member (14) within the cavity (7) of the actuator body (6), in such a way that:
- during normal operation of the braking system, said electric motor (M) is inactive, and said floating member (14) is in an end position in the direction of the downstream chamber (16), wherein the valve member (20) of the floating member (14) is in an open position of said passage, so that -during a normal brake actuation - the fluid pumped by the pumping device can flow from said inlet opening (8) to said outlet opening (9), and towards the hydraulic actuator device of the brake,
- while in conditions that require the activation of the ABS, said electric motor (M) is configured to be activated and to cause a movement of the floating member (14) in the direction of said upstream chamber and away from said end position, to a position wherein the valve member (20) is in a closed position of said passage, so that the communication between the upstream chamber (15) and the downstream chamber (16) is interrupted, and the downstream chamber (16) thereby increases in volume, generating a decrease in the pressure of the fluid supplied to the hydraulic actuator device of the brake,
**characterized in that**:
- the only valve member with which the actuator member (14) is provided is constituted by said main sealing ring (17),
- the aforesaid passage that connects the upstream chamber (15) with the downstream chamber (16) is defined only by an annular gap between an outer surface of said floating member (14) and the wall of said inner cavity (7) of the actuator body (6),
- the wall of said inner cavity (7) of the actuator body (6) and/or said main sealing ring (17) are configured in such a way that:
- in said end position of the floating member (14), the main sealing ring is spaced apart from the wall of the inner cavity (7), so as to leave free the communication, through said annular gap, between the upstream chamber (15) and the downstream chamber (16), while
- when the floating member (14) is moved away from said end position beyond a predetermined distance, said main sealing ring engages with the wall of said inner cavity (7), interrupting communication through said annular gap between the upstream chamber (15) and the downstream chamber (16).

2. An ABS actuator device according to claim 1, **characterized in that** said main sealing ring has a central annular portion mounted within a seat of the body of the floating member, and an outer elastically deformable circumferential lip, which engages with the wall of said inner cavity (7) when the floating member (14) is moved away from said end position beyond a predetermined distance.

3. An ABS actuator device according to claim 1 or 2, **characterized in that** the wall of said inner cavity (7) has:
- a portion of enlarged diameter at the position taken by the main sealing ring when the floating member is in its end position,
- a portion of reduced diameter at the position taken by the main sealing ring when the floating member is moved away from its end position, and
- a tapered portion connecting said portion of enlarged diameter to said portion of reduced diameter, which acts as an invitation surface to cause a deformation of the main sealing ring when this must engage the wall of said portion of reduced diameter of the inner cavity (7) following the moving away of the floating member from its end position.

4. An ABS actuator device according to claim 2, **characterized in that** said outer circumferential lip extends in a cantilevered manner from said central portion of the main sealing ring in the direction of said upstream chamber (15), in such a way that when said circumferential lip is engaged against the wall of the inner cavity (7) it is, however, able to deform elastically following a pressure increase in the downstream chamber (9) with respect to the upstream chamber (8), so as to re-establish communication through said annular gap and equalize the pressure in the two aforesaid upstream and downstream chambers (15, 16).

5. An ABS actuator device according to claim 1, **characterized in that** it is provided with a solenoid valve (30) configured to place the inlet opening (8) of the actuator device (2) in direct communication, when activated, with the outlet opening (9), in such a way that said solenoid valve (30) can be controlled by an electronic control unit of the braking system to establish said communication whenever a malfunction of the actuator device is detected.

6. An ABS actuator device according to claim 1, **characterized in that** it is provided with a pressure sensor (S_{P}) arranged to detect the pressure in said upstream chamber (15) or in said downstream chamber (16).

7. An ABS actuator device according to claim 1, **characterized in that** the aforesaid inlet (8) and outlet (9) openings of the actuator device of the invention are arranged on opposite sides of the body (6) of the actuator device, and are provided with respective connector elements (10, 11) with outlets at 90 degrees with respect to the respective openings (8, 9) in the body (6) of the actuator device, at least one of said connector elements (10, 11) being selectively orientable in different positions, in such a way that the two outlets (12, 13) of the connector elements can both be oriented parallelly to the axis of the floating member of the actuator device, and both facing towards the same end of the body of the actuator device or towards opposite ends of the body of the actuator device.

8. An ABS actuator device according to claim 1, **characterized in that** it comprises a screw-and-nut transmission (27, 29) between the electric motor (M) and the floating member (14), including a screw (27) rotatably mounted by means of a rolling bearing (28) within the body (6) of the actuator device, and axially locked with respect to said rolling bearing (28) by means of a tightening nut (42), and
**in that** the screw (27) is connected in rotation with the shaft (26) of the electric motor (M) by means of a bushing (38) having an axial hole that includes:
- a first shaped portion (39) for shape-coupling to the crankshaft (26), which has a corresponding shaped conformation,
- a second shaped portion 40, wider than the first portion (39) for shape-coupling to an end nose (27A) of the screw (27), which has a corresponding conformation, and
- a shaped front cavity (41) for shape-coupling to a tightening nut (42), which is screwed onto a threaded portion of the end nose of the screw to lock the inner ring of the bearing (28) against an annular shoulder of the screw (27),
in such a way that the bushing (39) is secured in rotation both with the shaft (26) of the electric motor (M) and with the screw (27), and also with the tightening nut (42), which is thus prevented from unscrewing.

9. An ABS actuator device according to claim 1, **characterized in that** said main sealing ring (17) is an O-ring, with circular cross-section.

## Patentansprüche

1. ABS-Aktuatorvorrichtung für ein hydraulisches Bremssystem eines Fahrrads, Zweirads oder Rollers, umfassend:
- einen Aktuatorkörper (6), der einen inneren Hohlraum (7) definiert und eine Einlassöffnung (8) sowie eine Auslassöffnung (9) aufweist, die mit dem Hohlraum (7) kommunizieren,
- ein Schwimmelement (14), das verschiebbar innerhalb des inneren Hohlraums (7) des Aktuatorkörpers (6) montiert ist, und derart ausgebildet ist, dass innerhalb des Hohlraums (7) eine mit der Einlassöffnung (84) kommunizierende stromaufwärtige Kammer (15) und eine mit der Auslassöffnung (9) kommunizierende stromabwärtige Kammer (16) definiert ist,
- einen Hauptdichtungsring (17), der auf dem Schwimmelement (14) zwischen der stromaufwärtigen Kammer (15) und der stromabwärtigen Kammer (16) montiert ist,
- wobei die Einlass- (8) und die Auslassöffnung (9) angeordnet sind, hydraulisch mit einer Pumpvorrichtung verbunden zu sein, die einem Bremsaktuatorelement bzw. einer hydraulischen Aktuatorvorrichtung der Bremse zugeordnet ist,
- wobei das Schwimmelement (14) einen Durchgang zur hydraulischen Kommunikation zwischen der stromaufwärtigen Kammer (15) und der stromabwärtigen Kammer (16) definiert und mit einem Ventilelement versehen ist, um die hydraulische Kommunikation durch den Durchgang zu steuern,
- wobei die Aktuatorvorrichtung ferner einen Elektromotor (M) umfasst, der ausgebildet ist, die Position des Schwimmelements (14) innerhalb des Hohlraums (7) des Aktuatorkörpers (6) so zu steuern, dass:
- im normalen Betrieb des Bremssystems der Elektromotor (M) inaktiv ist und das Schwimmelement (14) sich in einer Endposition in der Richtung der stromabwärtigen Kammer (16) befindet, wobei das Ventilelement (20) des Schwimmelements (14) in einer offenen Position des Durchgangs ist, so dass bei einer normalen Bremsbetätigung
- das von der Pumpvorrichtung geförderte Fluid von der Einlassöffnung (8) zu der Auslassöffnung (9) und hin zu der hydraulischen Aktuatorvorrichtung der Bremse strömen kann,
- unter Bedingungen, welche die Aktivierung des ABS erfordern, der Elektromotor (M) ausgebildet ist, aktiviert zu werden und eine Bewegung des Schwimmelements (14) in Richtung der stromaufwärtigen Kammer und von der Endposition weg zu einer Position zu verursachen, in der das Ventilelement (20) in einer geschlossenen Position des Durchgangs ist, so dass die Kommunikation zwischen der stromaufwärtigen Kammer (15) und der stromabwärtigen Kammer (16) unterbrochen ist, wodurch die stromabwärtige Kammer (16) im Volumen zunimmt und eine Verringerung des Drucks des der hydraulischen Aktuatorvorrichtung der Bremse zugeführten Fluids erzeugt wird,
**dadurch gekennzeichnet, dass**:
- das einzige Ventilelement, mit dem das Auktuatorelement (14) ausgestattet ist, durch den Hauptdichtungsring (17) bestimmt ist,
- der vorbenannte Durchgang, der die stromaufwärtige Kammer (15) mit der stromabwärtigen Kammer (16) verbindet, nur durch einen ringförmigen Spalt zwischen einer Außenfläche des Schwimmelements (14) und der Wand des inneren Hohlraums (7) des Aktuatorkörpers (6) definiert ist,
- die Wand des inneren Hohlraums (7) des Aktorkörpers (6) und/oder des Hauptdichtungsrings (17) so ausgebildet ist, dass:
- in der Endposition des Schwimmelements (14) der Hauptdichtungsring von der Wand des inneren Hohlraums (7) beabstandet ist, so dass die Kommunikation durch den ringförmigen Spalt zwischen der stromaufwärtigen Kammer (15) und der stromabwärtigen Kammer (16) frei bleibt, während
- wenn das Schwimmelement (14) von der Endposition über einen vorbestimmten Abstand hinaus wegbewegt wird, greift der Hauptdichtungsring in die Wand des inneren Hohlraums (7) ein und unterbricht die Kommunikation durch den ringförmigen Spalt zwischen der stromaufwärtigen Kammer (15) und die stromabwärtigen Kammer (16).

2. ABS-Aktuatorvorrichtung nach Anspruch 1, **dadurch gekennzeichnet, dass** der Hauptdichtungsring einen zentralen ringförmigen Abschnitt aufweist, der in einem Sitz des Körpers des Schwimmelements montiert ist, und eine äußere elastisch verformbare Umfangslippe aufweist, die mit der Wand des inneren Hohlraums (7) eingreift, wenn das Schwimmelement (14) von der Endposition über einen vorbestimmten Abstand hinaus wegbewegt wird.

3. ABS-Aktuatorvorrichtung nach Anspruch 1 oder 2, **dadurch gekennzeichnet, dass** die Wand des inneren Hohlraums (7) aufweist:
- einen Abschnitt mit vergrößertem Durchmesser an der Position, die der Hauptdichtungsring einnimmt, wenn sich das Schwimmelement in seiner Endposition befindet,
- einen Abschnitt mit verringertem Durchmesser an der Position, die der Hauptdichtungsring einnimmt, wenn das Schwimmelement von seiner Endposition wegbewegt wird, und
- einen konischen Abschnitt, der den Abschnitt mit vergrößertem Durchmesser mit dem Abschnitt mit verringertem Durchmesser verbindet und als Einladungsfläche dient, um eine Verformung des Hauptdichtungsrings zu bewirken, wenn dieser an der Wand des Abschnitts mit verringertem Durchmesser des inneren Hohlraums (7) angreifen muss, nach dem Wegbewegen des Schwimmkörpers aus seiner Endposition.

4. ABS-Aktuatorvorrichtung nach Anspruch 2, **dadurch gekennzeichnet, dass** sich die äußere Umfangslippe freitragend von dem zentralen Abschnitt des Hauptdichtungsrings in Richtung der stromaufwärtigen Kammer (15) erstreckt, derart, dass wenn die Umlauflippe an der Wand des Innenhohlraums (7) anliegt, diese jedoch nach einem Druckanstieg in der stromabwärtigen Kammer (9) gegenüber der stromaufwärtigen Kammer (8) elastisch verformbar ist, um so wieder eine Kommunikation durch den ringförmigen Spalt aufzubauen und den Druck in den beiden vorbenannten stromaufwärtigen und stromabwärtigen Kammern (15, 16) auszugleichen.

5. ABS-Aktuatorvorrichtung nach Anspruch 1, **dadurch gekennzeichnet, dass** diese mit einem Magnetventil (30) versehen ist, das ausgebildet ist, bei Aktivierung die Einlassöffnung (8) der Aktuatorvorrichtung (2) in direkte Kommunikation mit der Auslassöffnung (9) zu bringen, derart, dass das Magnetventil (30) von einer elektronischen Steuereinheit des Bremssystems steuerbar ist, um die Kommunikation immer dann herzustellen, wenn eine Fehlfunktion der Aktuatorvorrichtung erkannt wird.

6. ABS-Aktuatorvorrichtung nach Anspruch 1, **dadurch gekennzeichnet, dass** diese mit einem Drucksensor (S_{P}) versehen ist, der angeordnet ist, den Druck in der stromaufwärtigen Kammer (15) oder in der stromabwärtigen Kammer (16) zu erfassen.

7. ABS-Aktuatorvorrichtung nach Anspruch 1, **dadurch gekennzeichnet, dass** die vorbenannten Einlass- (8) und Auslassöffnungen (9) der erfindungsgemäßen Aktuatorvorrichtung auf gegenüberliegenden Seiten des Körpers (6) der Aktuatorvorrichtung angeordnet sind, und mit jeweiligen Anschlusselementen (10, 11) mit Auslässen im 90-Grad-Winkel bezüglich zu den jeweiligen Öffnungen (8, 9) in dem Körper (6) der Aktuatorvorrichtung versehen sind, wobei mindestens eines der Anschlusselemente (10, 11) selektiv in verschiedenen Positionen ausrichtbar ist, so dass die beiden Auslässe (12, 13) der Anschlusselemente beide parallel zu der Achse des Schwimmelements der Aktuatorvorrichtung ausrichtbar sind, und beide dem gleichen Ende des Körpers der Aktuatorvorrichtung oder in Richtung gegenüberliegender Enden des Körpers der Aktuatorvorrichtung zugewandt sind.

8. ABS-Aktuatorvorrichtung nach Anspruch 1, **dadurch gekennzeichnet, dass** diese eine Schrauben-Mutter-Übertragung (27, 29) zwischen dem Elektromotor (M) und dem Schwimmelement (14) umfasst, einschließlich einer Schraube (27), die drehbar mittels eines Wälzlagers (28) innerhalb des Körpers (6) der Aktuatorvorrichtung montiert und hinsichtlich des Wälzlagers (28) mittels einer Spannmutter (42) axial gesichert ist, und
dadurch, dass die Schraube (27) drehbar mit der Welle (26) des Elektromotors (M) mittels einer Buchse (38) verbunden, die ein axiales Loch aufweist, das umfasst:
- einen ersten geformten Abschnitt (39) zur Formkoppelung an die Kurbelwelle (26), die eine entsprechende Konformation aufweist,
- einen zweiten geformten Abschnitt 40, der breiter als der erste Abschnitt (39) ist, zur Formkoppelung mit einer Endnase (27A) der Schraube (27), die eine entsprechende Konformation aufweist, und
- einen geformten vorderen Hohlraum (41) zur Formkopplung mit einer Spannmutter (42), die auf einen Gewindeabschnitt der Endnase der Schraube aufgeschraubt ist, um den Innenring des Lagers (28) gegen eine ringförmige Schulter der Schraube (27) zu sichern,
derart, dass die Buchse (39) sowohl mit der Welle (26) des Elektromotors (M) als auch mit der Schraube (27) und mit der Spannmutter (42) drehend gesichert ist, welche somit am Herausdrehen gehindert wird.

9. ABS-Aktuatorvorrichtung nach Anspruch 1, **dadurch gekennzeichnet, dass** der Hauptdichtungsring (17) ein O-Ring mit kreisförmigem Querschnitt ist.

## Revendications

1. Dispositif d'actionnement antiblocage (ABS) pour un système de freinage hydraulique d'une bicyclette, d'un vélo, ou d'un scooter, comprenant :
- un corps d'actionnement (6) définissant une cavité interne (7) et ayant une ouverture d'entrée (8) et une ouverture de sortie (9) en communication avec ladite cavité (7),
- un élément flottant (14) monté de manière coulissante à l'intérieur de la cavité interne (7) du corps d'actionnement (6) et configuré de façon à définir, à l'intérieur de ladite cavité (7), une chambre amont (15) en communication avec ladite ouverture d'entrée (84) et une chambre aval (16) en communication avec ladite ouverture de sortie (9),
- une bague d'étanchéité principale (17) montée, sur l'élément flottant (14), entre ladite chambre amont (15) et ladite chambre aval (16),
- dans lequel lesdites ouvertures d'entrée (8) et de sortie (9) sont agencées pour être reliées de manière hydraulique à un dispositif de pompage associé à un élément d'actionnement de frein et à un dispositif d'actionnement hydraulique du frein, respectivement,
- ledit élément flottant (14) définissant un passage pour une communication hydraulique entre ladite chambre amont (15) et ladite chambre aval (16) et étant pourvu d'un élément de soupape pour commander la communication hydraulique à travers ledit passage,
- ledit dispositif d'actionnement comprenant en outre un moteur électrique (M) configuré pour commander la position de l'élément flottant (14) à l'intérieur de la cavité (7) du corps d'actionnement (6), de sorte que :
- pendant le fonctionnement normal du système de freinage, ledit moteur électrique (M) est inactif, et ledit élément flottant (14) est dans une position d'extrémité dans la direction de la chambre aval (16), où l'élément de soupape (20) de l'élément flottant (14) est dans une position ouverte dudit passage, de sorte que - pendant un actionnement de frein normal, le liquide pompé par le dispositif de pompage puisse s'écouler de ladite ouverture d'entrée (8) à ladite ouverture de sortie (9) et vers le dispositif d'actionnement hydraulique du frein,
- tandis que dans des conditions nécessitant l'activation de l'ABS, ledit moteur électrique (M) est configuré pour être activé et pour provoquer un déplacement de l'élément flottant (14) dans la direction de ladite chambre amont et loin de ladite position d'extrémité, vers une position où l'élément de soupape (20) est dans une position fermée dudit passage, de sorte que la communication entre la chambre amont (15) et la chambre aval (16) soit interrompue, et le volume de la chambre aval (16) augmente ainsi, générant une diminution de la pression du fluide fourni au dispositif d'actionnement hydraulique du frein,
**caractérisé en ce que** :
- le seul élément de soupape duquel est pourvu l'élément d'actionnement (14) est constitué de ladite bague d'étanchéité principale (17),
- le passage susmentionné qui relie la chambre amont (15) à la chambre aval (16) est défini uniquement par un espace annulaire entre une surface externe dudit élément flottant (14) et la paroi de ladite cavité interne (7) du corps d'actionnement (6),
- la paroi de ladite cavité interne (7) du corps d'actionnement (6) et/ou ladite bague d'étanchéité principale (17) sont configurées de sorte que :
- dans ladite position d'extrémité de l'élément flottant (14), la bague d'étanchéité principale soit espacée de la paroi de la cavité interne (7) de façon à laisser la communication libre, à travers ledit espace annulaire, entre la chambre amont (15) et la chambre aval (16), tandis que
- lorsque l'élément flottant (14) est déplacé loin de ladite position d'extrémité au-delà d'une distance prédéterminée, ladite bague d'étanchéité principale entre en prise avec la paroi de ladite cavité interne (7), interrompant la communication à travers ledit espace annulaire entre la chambre amont (15) et la chambre aval (16).

2. Dispositif d'actionnement antiblocage (ABS) selon la revendication 1, **caractérisé en ce que** ladite bague d'étanchéité principale a une partie annulaire centrale montée à l'intérieur d'un siège du corps de l'élément flottant et une lèvre circonférentielle externe élastiquement déformable, qui entre en prise avec la paroi de ladite cavité interne (7) lorsque l'élément flottant (14) est déplacé de ladite position d'extrémité au-delà d'une distance prédéterminée.

3. Dispositif d'actionnement antiblocage (ABS) selon la revendication 1 ou 2, **caractérisé en ce que** la paroi de ladite cavité interne (7) a :
- une partie de diamètre agrandi à la position prise par la bague d'étanchéité principale lorsque l'élément flottant est dans sa position d'extrémité,
- une partie de diamètre réduit à la position prise par la bague d'étanchéité principale lorsque l'élément flottant est déplacé loin de sa position d'extrémité, et
- une partie effilée reliant ladite partie de diamètre agrandi à ladite partie de diamètre réduit, qui agit en tant que surface d'invite pour provoquer une déformation de la bague d'étanchéité principale lorsqu'elle doit entrer en prise avec la paroi de ladite partie de diamètre réduit de la cavité interne (7) à la suite du déplacement de l'élément flottant loin de sa position d'extrémité.

4. Dispositif d'actionnement antiblocage (ABS) selon la revendication 2, **caractérisé en ce que** ladite lèvre circonférentielle externe s'étend en porte-à-faux par rapport à ladite partie centrale de la bague d'étanchéité principale dans la direction de ladite chambre amont (15), de sorte que lorsque ladite lèvre circonférentielle soit en prise contre la paroi de la cavité interne (7), elle peut, cependant, se déformer élastiquement à la suite d'une augmentation de pression dans la chambre aval (9) par rapport à la chambre amont (8) de façon à rétablir la communication à travers ledit espace annulaire et égaliser la pression dans les deux chambres amont et aval susmentionnées (15, 16).

5. Dispositif d'actionnement antiblocage (ABS) selon la revendication 1, **caractérisé en ce qu'**il est pourvu d'une électrovanne (30) configurée pour placer l'ouverture d'entrée (8) du dispositif d'actionnement (2) en communication directe, lors de l'activation, avec l'ouverture de sortie (9) de sorte que ladite électrovanne (30) puisse être commandée par une unité de commande électronique du système de freinage pour établir ladite communication à chaque fois qu'un dysfonctionnement du dispositif d'actionnement est détecté.

6. Dispositif d'actionnement antiblocage (ABS) selon la revendication 1, **caractérisé en ce qu'**il est pourvu d'un capteur de pression (S_{P}) agencé pour détecter la pression dans ladite chambre amont (15) ou dans ladite chambre aval (16).

7. Dispositif d'actionnement antiblocage (ABS) selon la revendication 1, **caractérisé en ce que** lesdites ouvertures d'entrée (8) et de sortie (9) susmentionnées du dispositif d'actionnement de l'invention sont agencées sur des côtés opposés du corps (6) du dispositif d'actionnement, et sont pourvues d'éléments de liaison respectifs (10, 11) avec des sorties à 90 degrés par rapport aux ouvertures respectives (8, 9) dans le corps (6) du dispositif d'actionnement, au moins l'un desdits éléments de liaison (10, 11) pouvant être orienté de manière sélective dans différentes positions, de sorte que les deux sorties (12, 13) des éléments de liaison puissent être tous deux orientés parallèlement à l'axe de l'élément flottant du dispositif d'actionnement, et sont tous deux tournés vers la même extrémité du corps du dispositif d'actionnement ou vers des extrémités opposées du corps du dispositif d'actionnement.

8. Dispositif d'actionnement antiblocage (ABS) selon la revendication 1, **caractérisé en ce qu'**il comprend une transmission vis et écrou (27, 29) entre le moteur électrique (M) et l'élément flottant (14), comprenant une vis (27) montée en rotation au moyen d'un palier à roulement (28) à l'intérieur du corps (6) du dispositif d'actionnement, et verrouillée axialement par rapport audit palier de roulement (28) au moyen d'un écrou de serrage (42), et
**en ce que** la vis (27) est reliée en rotation à l'arbre (26) du moteur électrique (M) au moyen d'une douille (38) ayant un trou axial qui comprend :
- une première partie façonnée (39) pour un couplage de forme avec le vilebrequin (26), qui a une conformation de forme correspondante,
- une seconde partie façonnée (40), plus large que la première partie (39) pour un couplage de forme avec un nez d'extrémité (27A) de la vis (27) qui a une conformation correspondante, et
- une cavité avant façonnée (41) pour un couplage de forme avec un écrou de serrage (42), qui est vissé sur une partie filetée du nez d'extrémité de la vis pour verrouiller la bague interne du palier (28) contre un épaulement annulaire de la vis (27),
de sorte que la douille (39) soit fixée en rotation à la fois à l'arbre (26) du moteur électrique (M) et à la vis (27) et également à l'écrou de serrage (42), qui est ainsi empêché de se dévisser.

9. Dispositif d'actionnement antiblocage (ABS) selon la revendication 1, **caractérisé en ce que** ladite bague d'étanchéité principale (17) est un joint torique, présentant une section transversale circulaire.
